# EUROPÄISCHE PATENTANMELDUNG

(11) **EP 1 264 807 A1**
(43) Veröffentlichungstag der Anmeldung: **11.12.2002**
(21) Anmeldenummer: 01114055.5
(22) Anmeldetag: 08.06.2001
(51) Int. Cl.: C04B 14/04

(54) **Mullithaltiger Stoff, dessen Herstellung und Verwendung**

(71) Anmelder: Degussa AG, 40474 Düsseldorf (DE)
(72) Erfinder: Menzel, Frank, Dr., 63456 Hanau (DE); Oswald, Monika, Dr., 63454 Hanau (DE); Staab, Eugen, Dr., 63768 Hösbach (DE)

(57) **Zusammenfassung**

Mullithaltiger Stoff aus einem kolloidalen Sol-Gel-Prozeß, dessen Ausgangsstoffe, in Form wässeriger Dispersionen mit einer Feststoffdichte von 10 bis 85 Gew.-%, feindisperse, pyrogene Metalloxid-Partikel enthaltend Silizium und Aluminium, oder feindisperse, pyrogene Metalloxid-Partikel enthaltend Silizium und/oder Aluminium und einer in der Dispersion gelösten Substanz oder Substanzen enthaltend Silizium und/oder Aluminium sind, welche in einem Temperaturbereich von 1000°C bis 1700°C wärmebehandelt werden, wobei ein Mullitanteil des Stoffes von wenigstens 60% resultiert. Ferner ist die Herstellung des mullithaltigen Stoffes beschrieben und seine Verwendung für die Beschichtung von Oberflächen und die Herstellung von Formkörpern.

## Beschreibung

Gegenstand der Erfindung ist ein mullithaltiger Stoff der mittels eines kolloidalen Sol-Gel-Verfahrens unter Verwendung pyrogener Vorstufen erhalten wird, dessen Herstellung und Verwendung.

Mullit ist ein Aluminium-Silizium-Mischoxid und besitzt eine Zusammensetzung zwischen 2 Al₂O₃·SiO₂ und 3 Al₂O₃·2SiO₂. Mullit ist bekannt für seine Kriechbeständigkeit, Hochtemperaturstabilität, chemische Resistenz und geringe thermische Ausdehnung.

Diese Eigenschaften machen Mullit zu einem interessanten Stoff zur Beschichtung von Oberflächen beanspruchter Materialien. Insbesondere bei Verbundwerkstoffen gilt es zum Beispiel die Oxidation von Verstärkungsmaterialien zu verhindern.

Die Synthese von Mullit erfolgt im wesentlichen nach einer Pulverroute, einer Sol-Gel-Route oder Ablagerungsmethoden über Dampfphasen.

Die Pulverroute, ausgehend von Aluminiumoxid und Siliziumoxid, erfordert Sintertemperaturen von mehr als 1650 °C, und ist mit hohen Volumenabnahmen von bis zu 20 % verbunden (was zu Rissen führen kann), um eine vollständige Mullitisierung zu erreichen.

Durch Zusätze kann diese Temperatur erniedrigt werden. Nachteilig hierbei ist, dass diese Zusätze in der Regel im Material verbleiben und die Eigenschaften des Mullites beeinträchtigen können.

Bei der Sol-Gel-Route, welche auf Hydrolyse und Polykondensationsreaktionen von Vorläuferverbindungen in gelöster Form beruht, wird ein Sol und danach ein Gel gebildet, das anschließend bei erhöhter Temperatur behandelt.

Nachteilig hierbei ist die geringe Dichte des Gelkörpers, der beim Trocknungs- und Sinterprozess sehr stark schrumpfen kann. Folgen hiervon sind zum Beispiel Blasen und Risse in der Beschichtung.

Schließlich gibt es noch Techniken, die der Ablagerung von Mullit via Dampfphase beruhen, wie CVD (Chemical Vapor Deposition) und PVD (Physical Vapor Deposition). Diese Verfahren sind sehr zeitaufwendig und sehr teuer.

Die Aufgabe der Erfindung ist es daher einen mullithaltigen Stoff bereitzustellen, der die genannten Nachteile des Standes der Technik, insbesonders hohe Sintertemperaturen, Rissbildung vermeidet und der wirtschaftlich sinnvoll herstellbar ist.

Die Aufgabe wird dadurch gelöst, dass der mullithaltige Stoff aus einem kolloidalen Sol-Gel-Prozeß erhalten wird, dessen Ausgangsstoffe, in Form wässeriger Dispersionen mit einer Feststoffdichte von 10 bis 85 Gew.-%, feindisperse, pyrogene Metalloxid-Partikel enthaltend Silizium und Aluminium, oder feindisperse, pyrogene Metalloxid-Partikel enthaltend Silizium und/oder Aluminium und einer in der Dispersion gelösten Substanz oder Substanzen enthaltend Silizium und/oder Aluminium sind, die in einem Temperaturbereich von 1000°C bis 1700°C wärmebehandelt werden und der Mullitanteil des Stoffes wenigstens 60% beträgt.

Gemäß einer besonderen Ausführungsform liegt die Temperatur der Wärmebehandlung zwischen 1150 und 1300°C.

Der erfindungsgemäße mullithaltige Stoff weist bevorzugt eine Dichte von 80% oder mehr der theoretischen Mullitdichte auf.

Dabei ist unter einem mullithaltigen Stoff ein Aluminium-Silizium-Mischoxid zu verstehen, mit einem Aluminiumoxidanteil von 71,8 bis 77,2 Gew.-% Aluminiumoxid. Daneben kann der Stoff bis zu 40% Anteile von Aluminiumoxid und/oder Siliziumdioxid und/oder anderer Aluminium-Siliziummischoxide enthalten. Der Begriff kolloidaler Sol-Gel-Prozeß weist in diesem Zusammenhang auf das Vorhandensein bereits vorverdichteter, pyrogener Partikel hin. Pyrogene Partikel sind solche die nach bekannten Verfahren, insbesondere der Flammenhydrolyse, bei hohen Temperaturen aus der Gasphase, erhalten werden können.

Wesentlich für die Erfindung ist die Verwendung feindisperser, pyrogener Metalloxidpartikel, die bereits über ihren Herstellprozess vorverdichtet sind und keine oder nur eine geringe Anzahl von Poren aufweisen. Mit diesen Partikeln ist es möglich hochgefüllte Dispersionen herzustellen, die zum einen eine niedrige Sintertemperatur zur Mullitisierung erfordern und die eine hohe Dichte mit keiner oder nur geringer Neigung zur Bildung von Rissen aufweisen.

Die dem erfindungsgemäßen mullithaltigen Stoff zugrunde liegenden feindispersen, pyrogenen Metalloxid-Partikel können Siliziumdioxid und/oder Aluminiumoxid und/oder Silizium-Aluminium-Mischoxid und/oder Mischungen daraus umfassen. Solche Siliziumdioxid-Partikel sind zum Beispiel beschrieben in Ullmann's Encyclopedia of Industrial Chemistry, 5^{th} Edition, Vol. A23, Seiten 635 ff. Pyrogen hergestelltes Aluminiumoxid ist zum Beispiel beschrieben in EP-A-1 083 151. Die Herstellung von pyrogenem Silizium-Aluminium-Mischoxid ist zum Beispiel beschrieben in EP-A-1 048 617 oder EP-A-995 718.

Besonders vorteilhaft als Ausgangsverbindungen für den mullithaltigen Stoff sind pyrogenes Siliziumdioxid und pyrogenes Aluminiumoxid.

Für den erfindungsgemäßen mullithaltigen Stoff weisen die pyrogenen Partikel bevorzugt eine BET-Oberfläche, bestimmt nach DIN 66131, von 10 bis 400 m²/g auf.

Gemäß einer besonderen Ausführungsform können die Ausgangsverbindungen des erfindungsgemäßen mullithaltigen Stoffes auch aus pyrogenen Partikeln bestehen, die zu Granulaten mit einer Stampfdichte von 150 bis 800 g/l verdichtet worden sind. Eine Möglichkeit der Herstellung solcher Granulate ist in DE-A-19601415 am Beispiel von Siliziumdioxid beschrieben.

Die in der Dispersion gelösten Stoffe können Salze des Aluminiums und/oder Siliziums, metallorganische Verbindungen des Aluminiums und/oder Siliziums und Mischungen davon umfassen.

Besonders vorteilhaft ist es, wenn die in der Dispersion gelöste Substanz Tetraalkoxysilane und/oder deren Oligomere und die pyrogenen Metalloxid-Partikel Aluminiumoxid sind.

Ebenfalls besonders vorteilhaft ist es, wenn die in der Dispersion gelöste Substanz Aluminiumalkoholate und die pyrogenen Metalloxid-Partikel Siliziumdioxid sind.

Der pH-Wert der Dispersion, aus der der erfindungsgemäße mullithaltige Stoff erhalten wird, kann mit organischen und/oder anorganischen Säuren oder mit organischen und/oder anorganischen Basen eingestellt werden.

Organische Säuren können zum Beispiel sein Carbonsäuren der allgemeinen Formel CₙH₂ₙ₊₁CO₂H, bevorzugt n = 0 bis 6, Dicarbonsäuren der allgemeinen Formel HO₂C(CH₂)ₙCO₂H, bevorzugt n = 0-4, Hydroxycarbonsäuren der allgemeinen Formel RCH(OH)CO₂H, mit R=CH₃ oder CH₂CO₂H oder CH(OH)CO₂H, Glykolsäure, Brenztraubensäure, Salicylsäure oder Mischungen der vorgenannten. Anorganische Säuren können sein Salpetersäure, Schwefelsäure oder Phosphorsäure.

Organische Basen können sein Triethylamin, Pyridin oder Tetramethylammoniumhydroxid oder Mischungen der vorgenannten. Anorganische Basen können sein Ammoniak, Kaliumhydroxid, Calciumhydroxid, Ammoniumhydroxid oder Aluminiumhydroxid oder Mischungen der vorgenannten.

Die wässerige Dispersion kann ferner Zusatzstoffe in Form von polymeren Verbindungen, ionischen Verbindungen und/oder Metallalkoxiden zum Steuern des Gelierens und/oder zur Erhöhung der Grünkörperfestigkeit zugesetzt werden. Beispielsweise können Metallalkoxide der Formel Me(OR)ₓ, wobei Me für ein Metall, vorzugsweise Silizium steht, R für eine Alkylgruppe steht und x der Wertigkeit des Metallions entspricht, zugesetzt werden.

Gegenstand der Erfindung ist ebenfalls ein Verfahren zur Herstellung des erfindungsgemäßen mullithaltigen Stoffes. Eine wässerige Dispersion enthaltend pyrogenes Siliziumdioxid und pyrogenes Aluminiumoxid, oder pyrogenes Silizium-Aluminium-Mischoxid oder Mischungen der vorgenannten, wobei das Molverhältnis Al₂O₃/SiO₂ von 50:50 bis 80:20 reicht, wird geliert, gegebenenfalls gereinigt und anschließend gesintert.

Gemäß einer besonderen Ausführungsform kann das Verfahren auch in der Art durchgeführt werden, dass anstelle einer wässerigen Dispersion eine Mischung von Dispersionen enthaltend Siliziumdioxid und Aluminiumoxid oder Siliziumdioxid und Silizium-Aluminium-Mischoxid oder Aluminiumoxid und Silizium-Aluminium-Mischoxid verwendet wird.

Ein anderes Verfahren zur Herstellung des mullithaltigen Stoffes ist dadurch gekennzeichnet, dass man eine wässerige Dispersion enthaltend, pyrogenes Siliziumdioxid oder pyrogenes Aluminiumoxid oder pyrogenes Silizium-Aluminium-Mischoxid oder Mischungen der vorgenannten und Salzen des Aluminiums und/oder Siliziums, metallorganische Verbindungen des Aluminiums und/oder Siliziums und Mischungen hiervon einsetzt, wobei das Molverhältnis Al₂O₃/SiO₂ von 50:50 bis 80:20 reicht, geliert, gegebenenfalls reinigt und anschließend sintert.

Bei beiden Verfahren kann der pH-Wert der wässerigen Dispersion mit organischen und/oder anorganischen Säuren oder mit organischen und/oder anorganischen Basen eingestellt werden.

Organische Säuren können zum Beispiel sein Carbonsäuren der allgemeinen Formel CₙH₂ₙ₊₁CO₂H, bevorzugt n = 0 bis 6, Dicarbonsäuren der allgemeinen Formel HO₂C(CH₂)ₙCO₂H, bevorzugt n = 0-4, Hydroxycarbonsäuren der allgemeinen Formel RCH(OH)CO₂H, mit R=CH₃ oder CH₂CO₂H oder CH(OH)CO₂H, Glykolsäure, Brenztraubensäure, Salicylsäure oder Mischungen der vorgenannten. Anorganische Säuren können sein Salpetersäure, Schwefelsäure oder Phosphorsäure.

Organische Basen können sein Triethylamin, Pyridin oder Tetramethylammoniumhydroxid oder Mischungen der vorgenannten. Anorganische Basen können sein Ammoniak, Kaliumhydroxid, Calciumhydroxid, Ammoniumhydroxid oder Aluminiumhydroxid oder Mischungen der vorgenannten.

Bei beiden Verfahren können ferner der Dispersion Zusatzstoffe in Form von polymeren Verbindungen, ionischen Verbindungen und/oder Metallalkoxiden zum Steuern des Gelierens und/oder zur Erhöhung der Grünkörperfestigkeit zugesetzt werden. Beispielsweise können Metallalkoxide der Formel Me(OR)ₓ, wobei Me für ein Metall, vorzugsweise Silizium steht, R für eine Alkylgruppe steht und x der Wertigkeit des Metallions entspricht, zugesetzt werden.

Die Sintertemperatur liegt bevorzugt bei 1000 bis 1700°C. Besonders bevorzugt ist der Bereich zwischen 1150 und 1300°C.

Ein weiterer Gegenstand der Erfindung ist die Verwendung des erfindungsgemäßen mullithaltigen Stoffes zur Beschichtung von Oberflächen. Insbesondere können Oberflächen enthaltend Kohlenstoffmaterialien und/oder Kohlenstoff-Silizium-Materialien beschichtet werden. Der erfindungsgemäße mullithaltige Stoff schützt, bevorzugt bei hohen Temperaturen, solche Oberflächen vor Oxidation, Gaspenetration und mechanischen Einflüssen und verleiht dem Werkstoff mechanische Stabilität.

Des weiteren kann der erfindungsgemäße mullithaltige Stoff Verwendung finden zur Herstellung von Formkörpern im Maschinen-, Apparate- und Motorenbau, in der Meßtechnik und in optischen Bauteilen. Aufgrund der hohen Feststoffdichte in der Dispersion bei der Herstellung des mullithaltigen Stoffes und des daraus resultierenden geringen Schrumpfes beim Sintern können nicht schrumpfende zweite Phasen in Form von Teilchen, Fasern, Plättchen usw. eingebracht werden. Der erfindungsgemäße mullithaltige Stoff stellt eine ideale Matrix dar, sowohl für verstärkende und/oder verschleißmindernde Phasen. Die moderaten Sintertemperaturen erleichtern das Einlagern kohlenstoffhaltiger Phasen.

### Beispiel 1

75,42 g pyrogenes Aluminiumoxid (Aluminiumoxid C, Fa. Degussa) und 30,62 g pyrogenes Siliziumoxid (Aerosil OX 50, Fa. Degussa) werden in 245 g bidestilliertes Wasser mit Hilfe einer Dissolverscheibe eingebracht und 10 Minuten bei 2000 U/min vordispergiert. Anschließend erfolgt 15 Minuten lang die Dispergierung mittels Ultra-Turrax bei einer Schergeschwindigkeit von 6000 U/min.

Die Dispersion wird in eine Petrischale gebracht und geliert in weniger als einer Stunde, das Gel wird bei 60°C 3 Sunden getrocknet. Anschließend wird das getrocknete Gel unter Normalatmosphäre mit einer Aufheizrate von 5 K/min auf 1300 °C aufgeheizt und bei dieser Temperatur wiederum 3 Stunden gehalten. Anschließend erkaltet der Ofen ungeregelt.

Bei der Phasenanalyse mittels Röntgendiffraktometrie wird Mullit als einzige kristalline Phase nachgewiesen.

### Beispiel 2

340 g einer wässerigen 30 Gew.-% Aluminiumoxid-Dispersion (W 630, Fa. Degussa) und 132 g einer wässerigen Siliziumdioxid-Dispersion (K 330, Fa. Degussa) werden vereinigt. Die Mischung geliert innerhalb von einer Stunde. Das Gel wird bei 60°C 3 Sunden getrocknet. Anschließend wird das getrocknete Gel unter Normalatmosphäre mit einer Aufheizrate von 5 K/min auf 1300 °C aufgeheizt und bei dieser Temperatur wiederum 3 Stunden gehalten. Anschließend erkaltet der Ofen ungeregelt.

Bei der Phasenanalyse mittels Röntgendiffraktometrie wird Mullit und γ-Aluminiumoxid als kristalline Phase nachgewiesen.

## Patentansprüche

1. Mullithaltiger Stoff aus einem kolloidalen Sol-Gel-Prozeß, **dadurch gekennzeichnet, dass** seine Ausgangsstoffe, in Form wässeriger Dispersionen mit einer Feststoffdichte von 10 bis 85 Gew.-%, feindisperse, pyrogene Metalloxid-Partikel enthaltend Silizium und Aluminium, oder feindisperse, pyrogene Metalloxid-Partikel enthaltend Silizium und/oder Aluminium und einer in der Dispersion gelösten Substanz oder Substanzen enthaltend Silizium und/oder Aluminium, sind, die bei einer Temperatur von 1000°C bis 1700°C wärmebehandelt werden und der einen Mullitanteil von wenigstens 60% aufweist.

2. Mullithaltiger Stoff nach Anspruch 1, **dadurch gekennzeichnet, dass** die Temperatur der Wärmebehandlung zwischen 1150°C und 1300°C liegt.

3. Mullithaltiger Stoff nach Anspruch 1 oder 2, **dadurch gekennzeichnet, dass** er eine Dichte von 80% oder mehr der theoretischen Mullitdichte aufweist.

4. Mullithaltiger Stoff nach Anspruch 1 bis 3, **dadurch gekennzeichnet, dass** die feindispersen, pyrogenen Metalloxid-Partikel Siliziumdioxid und/oder Aluminiumoxid und/oder Silizium-Aluminium-Mischoxid und/oder Mischungen daraus umfassen.

5. Mullithaltiger Stoff nach den Ansprüchen 1 bis 4, **dadurch gekennzeichnet, dass** die pyrogenen Metalloxid-Partikel Aluminiumoxid und Siliziumdioxid sind.

6. Mullithaltiger Stoff nach den Ansprüchen 1 bis 5, **dadurch gekennzeichnet, dass** die feindispersen, pyrogenen Metalloxid-Partikel eine BET-Oberfläche von 10 bis 400 m²/g aufweisen.

7. Mullithaltiger Stoff nach den Ansprüchen 1 bis 6, **dadurch gekennzeichnet, dass** die pyrogenen Metalloxid-Partikel zu Granulaten mit einer Stampfdichte von 150 bis 800 g/l verdichtet sind.

8. Mullithaltiger Stoff nach den Ansprüchen 1 bis 7, **dadurch gekennzeichnet, dass** die in der wässerigen Dispersion gelösten Stoffe Salze des Aluminiums und/oder Siliziums, metallorganische Verbindungen des Aluminiums und/oder Siliziums und Mischungen davon umfassen.

9. Mullithaltiger Stoff nach den Ansprüchen 1 bis 8, **dadurch gekennzeichnet, dass** die pyrogenen Metalloxid-Partikel Aluminiumoxid und die in der wässerigen Dispersion gelöste Substanz Tetraalkoxysilane und/oder deren Oligomere sind.

10. Mullithaltiger Stoff nach den Ansprüchen 1 bis 8, **dadurch gekennzeichnet, dass** die pyrogenen Metalloxid-Partikel Siliziumdioxid und die in der Dispersion gelöste Substanz Aluminiumalkoholate sind.

11. Mullithaltiger Stoff nach den Ansprüchen 1 bis 10, **dadurch gekennzeichnet, dass** der pH-wert der wässerigen Dispersion mit organischen und/oder anorganischen Säuren oder mit organischen und/oder anorganischen Basen einzustellen ist.

12. Mullithaltiger Stoff nach den Ansprüchen 1 bis 11, **dadurch gekennzeichnet, dass** die wässerige Dispersion polymere Verbindungen, ionische Verbindungen und/oder Metallalkoxide als Zusatzstoffe zum Steuern des Gelierens und/oder zur Erhöhung der Grünkörperfestigkeit enthält.

13. Verfahren zur Herstellung des mullithaltigen Stoffes gemäß den Ansprüchen 1 bis 12, **dadurch gekennzeichnet, dass** man eine wässerige Dispersion enthaltend pyrogenes Siliziumdioxid und pyrogenes Aluminiumoxid, oder pyrogenes Silizium-Aluminium-Mischoxid oder Mischungen der vorgenannten, wobei das Molverhältnis Al₂O₃/SiO₂ von 50:50 bis 80:20 reicht, geliert, gegebenenfalls reinigt und anschließend sintert.

14. Verfahren nach Anspruch 13, **dadurch gekennzeichnet, dass** die wässerige Dispersion eine Mischung von Dispersionen enthaltend Siliziumdioxid und Aluminiumoxid oder Siliziumdioxid und Silizium-Aluminium-Mischoxid oder Aluminiumoxid und Silizium-Aluminium-Mischoxid ist.

15. Verfahren zur Herstellung des mullithaltigen Stoffes gemäß den Ansprüchen 1 bis 12, **dadurch gekennzeichnet, dass** man eine wässerige Dispersion enthaltend, pyrogenes Siliziumdioxid oder pyrogenes Aluminiumoxid oder pyrogenes Silizium-Aluminium-Mischoxid oder Mischungen der vorgenannten und Salzen des Aluminiums und/oder Siliziums, metallorganische Verbindungen des Aluminiums und/oder Siliziums und Mischungen hiervon, wobei das Gewichtsverhältnis Al₂O₃/SiO₂ von 50:50 bis 80:20 reicht, geliert, gegebenenfalls reinigt und anschließend sintert.

16. Verfahren nach den Ansprüchen 13 bis 15, **dadurch gekennzeichnet, dass** der pH-Wert der wässerigen Dispersion mit organischen und/oder anorganischen Säuren oder mit organischen und/oder anorganischen Basen einzustellen ist.

17. Verfahren nach Anspruch 13 bis 16, **dadurch gekennzeichnet, dass** der wässerigen Dispersion polymere und/oder ionische Verbindungen als Zusatzstoffe zum Steuern des Gelierens und/oder zur Erhöhung der Grünkörperfestigkeit zugesetzt werden.

18. Verfahren nach den Ansprüchen 13 bis 17, **dadurch gekennzeichnet, dass** die Sintertemperatur bei 1000 bis 1700°C, insbesonders bei 1150 bis 1300°C, liegt.

19. Verwendung des mullithaltigen Stoffes gemäß den Ansprüchen 1 bis 12, zur Beschichtung von Oberflächen.

20. Verwendung des mullithaltigen Stoffes gemäß den Ansprüchen 1 bis 12, zur Herstellung von Formkörpern im Maschinen-, Apparate- und Motorenbau, in der Meßtechnik und in optischen Bauteilen.
